# EUROPEAN PATENT SPECIFICATION

(11) **EP 3 755 018 B1**
(45) Date of publication and mention of the grant of the patent: **27.12.2023**
(21) Application number: 19181647.9
(22) Date of filing: 21.06.2019
(51) Int. Cl.: H04W 4/80, H04W 84/18

(54) **METHOD AND SYSTEM FOR DATA TRANSFER IN A BLUETOOTH LOW ENERGY NETWORK**
VERFAHREN UND SYSTEM ZUR DATENÜBERTRAGUNG IN EINEM BLUETOOTH-NIEDERENERGIENETZ
PROCÉDÉ ET SYSTÈME DE TRANSFERT DE DONNÉES DANS UN RÉSEAU BLUETOOTH À FAIBLE ÉNERGIE

(43) Date of publication of application: 23.12.2020
(73) Proprietor: Carrier Corporation, Palm Beach Gardens, FL 33418 (US)
(72) Inventor: LIN, Chih-Kuang, Dublin 15 (IE); VILLA, Davide, Cork, T23X540 (IE); KUENZI, Adam, SE, Salem, Oregon 97302-1142 (US); LANG, Michael, SE, Salem, Oregon 97302-1142 (US); TIWARI, Ankit, Bellevue, WA 98004 (US)
(74) Representative: Dehns

(56) References cited:
- US-A1- 2005 058 151
- US-A1- 2017 041 868

## Description

The present disclosure relates to Bluetooth networks, particularly to methods of communication between Bluetooth devices in a Bluetooth low energy network.

The Bluetooth^{®} Low Energy (BLE) specification is a set of standards for wireless network technologies operating within the 2.4 - 2.4835 GHz Industrial, Scientific and Medical (ISM) band. BLE is designed to considerably reduce power consumption compared to legacy, or "Classic", Bluetooth^{®} devices.

Applications for the BLE specification include healthcare, security, fitness, and home entertainment. Within these applications, devices may utilise Bluetooth mesh profiles to communicate with other BLE devices in a network. Each device in the network can transfer data between other devices in the network, creating a so-called "mesh".

A number of previous applications have attempted to address various issues such as increasing the speed at which a connection between BLE devices is established and for avoiding data packet collision.

According to the specification, a BLE device operates across 40 channels in the 2.4 GHz band, each mapped onto a set of RF (radio frequency) channel index values 0, 1, ... , 39. Channels 0 to 36 are used for the transmission of data while channels 37, 38, and 39 are for the transmission of advertising (ADV) events.

The term "node" as used herein may refer to any device that may have BLE capability. Such devices may include smartphones, smart plugs, light bulbs, laptops, home entertainment devices or any other device that can connect to a BLE network. A node may also be able to communicate in other wireless networks, such as Wi-Fi (RTM) networks or cellular networks. A node may also be able to communicate via the Internet through such networks.

In the status quo, when a node does not have any data to send, it operates in a mode termed the "default mode". The default mode includes periodical ADV events and a low power state between the ADV events. Otherwise, if the node does have data to send, the node periodically sends periodic ADV events and inserts a scan mode between the ADV events. The scan mode is the mode in which the node is able to receive advertising packets from other nodes. The period of time over which this occurs is known as a scan window.

The ADV event comprises transmitting an ADV packet on one of the ADV channels. A first node may advertise sequentially on some or all of the three ADV channels. Similarly, if the first node is in the scan mode, the scan may occur sequentially on some or all of the three ADV channels.

If a second node is in the scan mode and detects an ADV packet sent by the first node, the second node may communicate with the first node and a data session between the first and second nodes may be established. Once the data session has been established, data can then be transferred between the first and second nodes.

These rules enable a fast data session setup for data exchanges while minimizing a node's energy consumption.

In this standard regime, there is a significant chance of ADV packet collision between two nodes, leading to a failed data session setup. This is because ADV events are limited to three transmission channels. This problem can be exacerbated if the ADV interval (the time between ADV events) is short or if multiple nodes have synchronised ADV cycles. In both of these cases, the chance for ADV packet collision and, therefore, data session setup failure, is increased. To minimise this problem, the BLE specification includes a random delay of up to 10 ms before an ADV event to randomize the ADV's start time and reduce the likelihood of ADV packet collision. Such a method however is inefficient for the short ADV interval and synchronous ADV cycles cases.

US 2017/041868 A1 discloses a method of low-power data delivery in a wireless mesh network.

The scope of the invention is defined by the appended claims: An object of the invention is a method according to claim 1. Another object of the invention is a Bluetooth Low Energy (BLE) network as claimed in claim 10. A further object of the invention is a computer program product according to claim 12. Preferred embodiments are set out in the appended dependent claims.

Hereafter are described examples which are useful for understanding the invention.

The BLE devices may include any device that has the ability to communicate with other devices using Bluetooth low energy transmissions. Such devices may include smartphones, smart plugs, light bulbs, laptops, and home entertainment devices. BLE devices may be members of a BLE network. The BLE network may comprise a head node or gateway, where the head node is able to perform protocol conversions communicate data from the BLE network to another network that the head node is connected to. Other networks may include cellular networks, the Internet, a local intranet, and cloud networks.

In the BLE network, the BLE devices that are members of the network may be called nodes. The network may comprise any number of nodes and may be distributed so that the head node is connected to at least one node. Each node in the network may be connected directly to the head node or is connected to the head node via at least one other node. In this way, the head node is able to communicate with all nodes in a BLE network, and vice versa.

All nodes in the network may be considered to be downstream with respect to the head node and, conversely, the head node may be considered upstream of other nodes in the network. The structure of the network may be that data can travel from the head node and through other intermediary nodes before reaching a destination node. In this way, intermediary nodes may be upstream of some nodes and may be downstream of other nodes. A node that is at the edge of a network may be called an end node. Data that is transmitted from the head node to an intermediary node or end node may be considered to be travelling downstream. Data that is transmitted from an end node or intermediary node in the direction of the head node may be considered to be travelling upstream.

The BLE network may be configured to allow BLE devices to join and leave networks on the fly. The skilled person would readily understand that BLE networks may be configured to be restructured to account for new devices joining the network or current devices leaving the network. The skilled person would also readily understand that a BLE network may be configured to restructure itself to account for changes in the physical location of BLE devices in the network and/or optimise the network for efficient data transfer between devices.

The distance any particular node is away from the head node may be defined by the number of nodes data must travel through to reach that particular node. For example, a node that directly communicates with the head node may be considered one "hop" away from the head node. Likewise, a first node that communicates with the head node via a second node may be considered to be two "hops" away from the head node. In this latter case, the second node may be considered to be downstream of the head node and also upstream of the first node. In this way, it is possible to define how many hops any particular node is away from the head node. The number of hops has no bearing on the physical distance between nodes.

The hop distance for a particular node may change due to a reconfiguration of the network. Such a reconfiguration may occur for any number of reasons including, but not limited to: optimisation of the network; in response to the number of nodes in the network changing; and the physical movement of nodes in the network.

The hop distance for a particular node may be stored in the memory of said node as identifying data for that node. Other identifying data may include a node ID (identification) number or a MAC (media access control) address for the node. The node may store identifying data for other nodes in the network, such as neighbouring nodes.

When a node in the BLE network does not have data to send, it may maintain contact with the network by being in a default mode. The default mode may comprise the periodic emission of advertisement (ADV) events and being in a low power state between the ADV events. Periodic ADV interval range is between 20 ms and 10240 ms according to Bluetooth specification 4.0. Shorter the ADV interval is, more frequent the node wakes up and transmits the ADV packets (higher energy consumption).

A scan mode comprises a period of time in which a BLE device may receive data from an advertising BLE device. The channel on which the BLE device is scanning may be any one of the three ADV channels discussed above. The scan mode may sequentially cycle through each of the ADV channels. The period of time that the BLE device is scanning for an ADV channel is known as the "scan window". The period of time between scanning events is known as the "scan interval". The scan window may last for any length of duration up to a maximum length of time equal to the scan interval. According to Bluetooth specification 4.0, the scan window and scan interval range is between 2.5 ms and 10240 ms. The scan window may have a random duration within a time period. This time period determines the maximum time of scanning an ADV channel. The shorter this time period is, the faster the node scans all of the ADV channels and leads to a quick target discovery. The scan window may have a random duration that is less than or equal to the scan interval.

An advertisement (ADV) event comprises the transmission of an ADV signal by a first BLE device. The purpose of this signal may be to advertise that the first BLE device is available to establish a wireless connection. The ADV signal may be detected by a second BLE device that is in scan mode and a data session may then be established between the two devises and data may be exchanged between them.

As discussed above, a BLE device may advertise on up to three advertising channels. An ADV event may comprise a BLE device transmitting an ADV signal on one, two or all three of the three available channels.

When a node in the BLE network does have data to send, then it may execute the method of the present invention to establish a data session with another node in order to send said data.

An advantage of the present method is the reduction in the risk of ADV events or scan events being synchronous between two nodes. This reduces the likelihood of ADV or connect request packets colliding, and so reduces the risk of failure of the setup of a data session. Another advantage of this method is, by reducing the mean time for data sessions to be set up, nodes may return to their default state more quickly and so each node may save more power and battery life may be extended.

Before determining whether the data to send from the first node was received from an upstream node or a downstream node, the first node having data to send may start the scan mode. If the first node fails to receive an ADV packet from the second node within a predetermined amount of time, the first node may proceed with the step of determining whether the data to send from the first node was received from an upstream node or a downstream node.

In the case where the data to send is determined to have been received from an upstream node relative to the first node, and before the first node begins the ADV event, the first node may include a random time delay within a time period which is at least twice of an ADV event. This delay potentially creates a temporal transmission separation between two or more nodes with pending downstream data delivery. After the random time delay, the first node may begin an ADV event. If a data session is not successfully established after the ADV event, the first node may start a scan mode with the random scan window. If a data session is not established after the scan mode, the first mode may start a second ADV event. This cycle may be repeated until a data session is established. When a data session is successfully established between the first and second nodes, data may be transmitted between them.

In the case where the data to send is determined to have been received from a downstream node relative to the first node, and a data session is not established after the scan mode with the random scan window, the first mode may start an ADV event. If a data session is not established after the ADV event, then the first node starts a second scan mode. This cycle may be repeated until a data session is successfully established.

Certain embodiments of the invention will now be described by way of example only and with reference to the accompanying drawings in which:
Figure 1 shows an exemplary BLE network.
Figure 2 shows a pair of BLE devices.
Figure 3 is a flowchart illustrating a method for establishing a data session between two nodes in a BLE network.
Figures 4A and 4B show timelines for the cycle of ADV events and scan events that occur at a node attempting to set up a data session in accordance with the method of Figure 3.
Figure 5 shows a schematic view of a pair of BLE devices.

A node in a BLE network will be in a default mode if it does not have any data to send. The default mode involves emitting periodical advertisement (ADV) events and being in a low power state between the ADV events. If the node does have data to send, it will attempt to establish a data session with a second node by using any of the standard methods for doing so.

In the present disclosure, if a first node is not able to establish a data session with a second node using standard means within a time limit, the first node checks whether it is upstream or downstream of the second node. Depending on whether the first node is upstream or downstream of the second node, the first node takes one of two possible actions. The first node is able to determine its position in the data stream compared to the second node by comparing the hop distance of the first node to the hop distance of the second node. If the hop distance of the first node is greater than the hop distance of the second node, then the first node is downstream of the second node. If the hop distance of the first node is less than the hop distance of the second node, then the first node is upstream of the second node. Regarding the time limit that determines the data session establishment failure, this limit should include sufficient time for the first node to establish a connection within multiple ADV intervals (successfully hear the ADV packet of the second node). If there were no success after the multiple ADV intervals, the first node will adopt the proposed method in this disclosure. For example, this time threshold may be configured to be a duration equal to five ADV intervals.

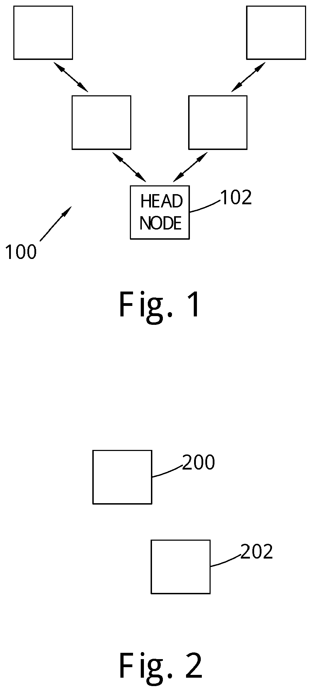

Figure 1 shows an example BLE network 100 where the network 100 is depicted as a tree. A head node 102 forms the "root" of the network 100 and devices in the BLE network form "branches" in the network. Some BLE devices are not directly connected to the head node 102; instead they are connected via a branch node. This means that any transmissions sent from the head node 102 may have to be communicated through another BLE node before the transmission reaches its destination node.

Figure 2 shows a first node 200 and a second node 202. The first node 200 and the second node 202 may be any two adjacent nodes in a BLE network 100. Here, the term "adjacent" means that the first node 200 and second node 202 are configured to communicate with one another directly, rather than through an intermediate node. Each node may be able to determine its position in a BLE network 100 relative to other nodes by storing identifying information about its neighbours. Neighbouring nodes may be defined as those that are immediately connected to a node in the network 100. identifying information may include hop distance and a unique node ID.

When data has been transmitted to a first node 200 the first node 200 then passes on that data to the next node in the network, where the next node in the network is the second node 202. If the data was received at the first node 200 from a downstream node, the first node 200 begins a scan mode. (Please note that the last sentence only happens when the first node fails to setup a connection with the second node after the predefined timer.) The scan mode may comprise scanning in one of the three ADV channels or scanning sequentially through more than one of the ADV channels.

If there is no successful reception of an ADV packet from the second node 200, and after the scan window, an ADV event occurs at the first node 200. Then, if the ADV event does not lead to the creation of a data session with the second node 202, the first node 200 returns to the scan mode. The first node 200 will cycle between scan mode and ADV mode until a data session is established.

If, instead, the data to send was received at the first node 200 from an upstream node the first node 200 begins with a random delay and an ADV event. (Please note that the last sentence only happens when the first node fails to setup a connection with the second node after the predefined timer.) If the second node 202 does not successfully receive the ADV packet, the first node 200 enters the scan mode. Then, as in the case above, the first node 200 will cycle between scan mode and ADV mode until a data session is established.

When the first node 200 successfully completes the scan mode or an ADV event, a data session will be established with the second node 202. The data session will facilitate the transfer of data from the first node 200 to the second node 202. Once the first node 200 has sent the data, the first node 200 returns to the default mode.

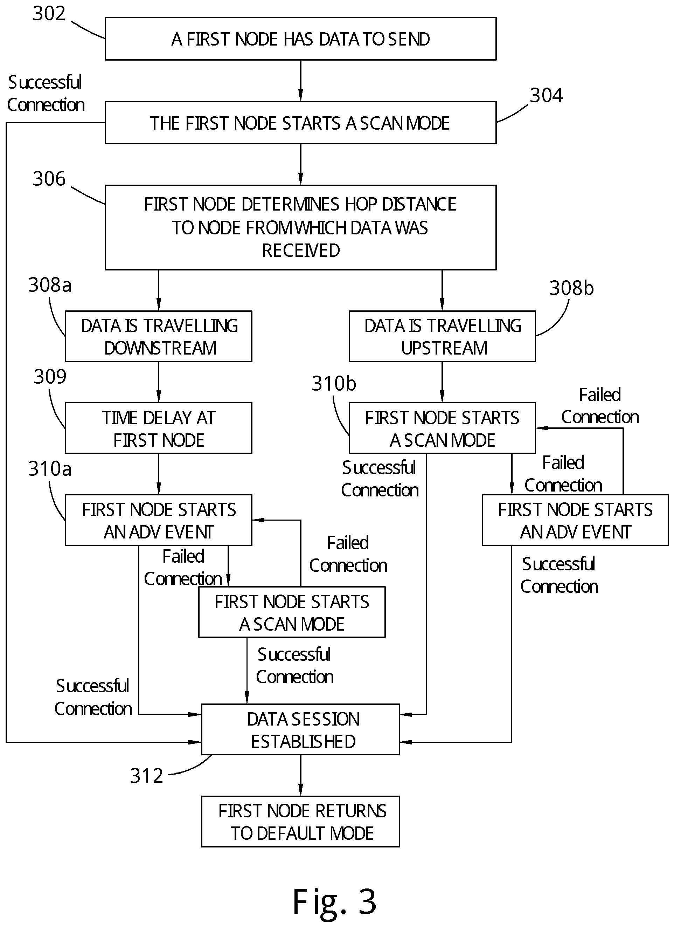

Figure 3 is a flowchart showing the method for establishing a data session between two nodes in a BLE network. At step 302, a first node has data to send. At step 304, the first node starts a scan mode. If the first node receives an ADV packet from the second node within a predetermined amount of time, then a data session is established with the second node and data can be transferred, as shown in step 312.

If an ADV packet is not received within the predetermined amount of time, then, at step 306, the first node determines its hop distance relative to a third node from which the data was received. If the hop distance of the first node is greater than the hop distance of the third node, then the data is determined to be travelling downstream, as shown at step 308a. Therefore, the first node is upstream of the second node. A random time delay having a length of at least twice of an ADV event occurs at step 309. This delay potentially creates a temporal transmission separation between two or more nodes with pending downstream data delivery. At step 310a, the first node performs an ADV event. If the ADV packet is not successfully received by the second node, the first node switches to scan mode and then cycles through scan modes and ADV events until a data session is established at step 312.

If the hop distance of the first node is smaller than the hop distance of the third node, then, as shown at step 308b, the data is determined to be travelling upstream. Therefore, the first node is downstream of the second node. At step 310b, the first node begins a scan mode. The scan mode may comprise scanning in one of the three ADV channels or scanning sequentially through more than one of the ADV channels. If the first node does not receive an ADV packet in the scan mode, it switches to an ADV event and then cycles through scan modes and ADV events until a data session is established at step 312. Once data transmission has been completed, the first node returns to the default mode.

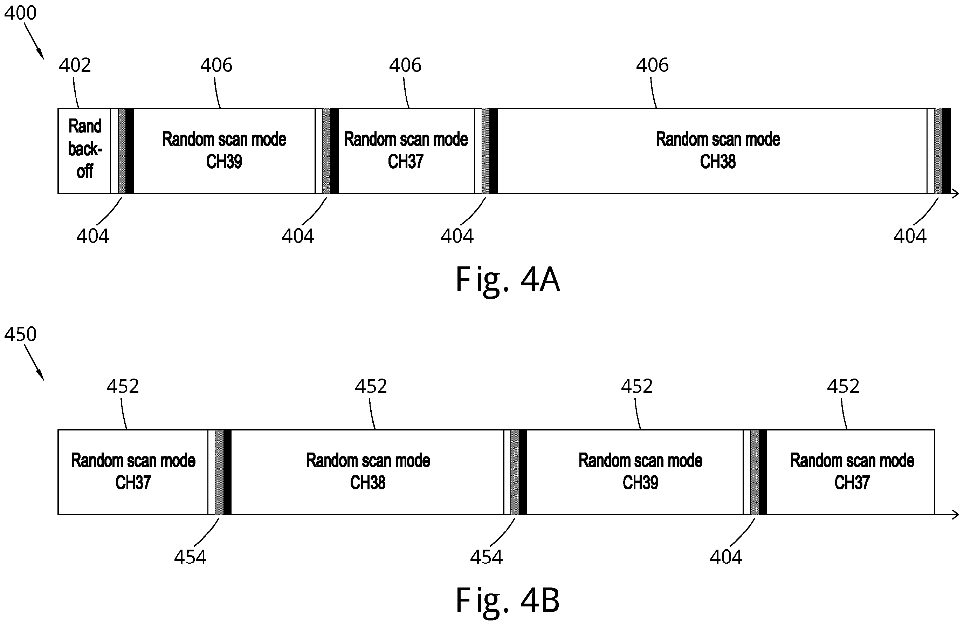

Figures 4A and 4B show timelines 400, 450 that assume no successful ADV packet reception for downstream and upstream data deliveries. These timelines illustrate the cycle of ADV events and scan events that occur at a node attempting to set up a data session in accordance with the method of Figure 3.

Figure 4A depicts the timeline 400 of a first node having data to send, where the data to send is from an upstream node and is travelling downstream, and so the first node is upstream from a second node. There is a delay 402, or "random back-off", within a time period which is at least twice of an ADV event. This delay 402 potentially creates a temporal transmission separation between two or more nodes with pending downstream data delivery. Immediately after the delay 402, an ADV event 404 occurs which involves emitting an ADV packet on all three ADV channels. After the ADV event 404, a scan mode 406 of random duration occurs. The node then cycles between ADV events 404 and scan modes 406 of random durations. Each successive scan mode 406 switches to the next ADV channel so that the scan modes scan sequentially through the three ADV channels.

Figure 4B depicts the timeline 450 of the first node having data to send, where the data to send is from a downstream node and is travelling upstream, and so the first node is downstream from a second node. After determining that it is upstream relative to the second node, the first node starts with a scan mode 452 of random length. Immediately after the scan mode 452, an ADV event 454 occurs which emits an ADV packet across all three ADV channels. Then another scan mode 452 of random duration begins immediately after the ADV event 454. Then, as before, the node cycles between ADV events 454 and scan modes 452 of random durations.

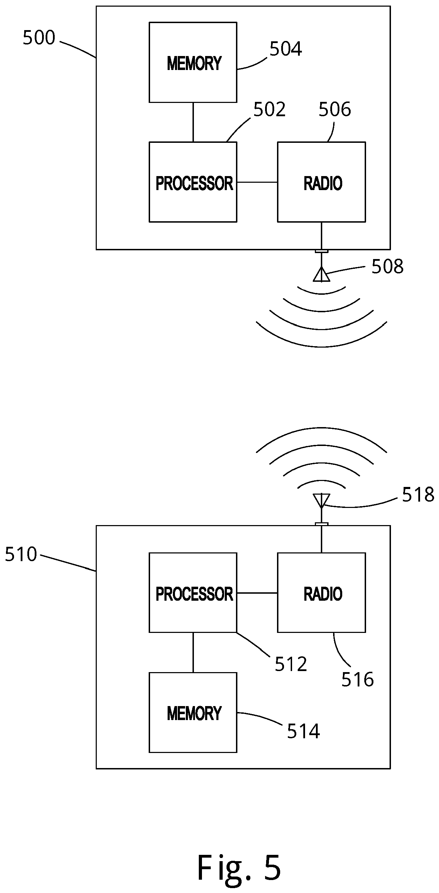

Figure 5 illustrates a pair of BLE devices 500, 510 which may utilise the methods discussed above. The BLE devices 500, 510 might be any suitable known type of device, and they are modified compared to the known devices to operate in accordance with a method as set out above. A first BLE device 500 comprises a processor 502, a memory unit 504, a radio 506, and an antenna 508. Computer program products for performing the methods described herein may be stored as an application in the memory unit 504. The memory unit 504 can be a hard drive, solid state or optical memory source. The processor 502 is configured to access and execute software, applications, and data stored on the memory unit 504.

The radio 506 is configured to receive and transmit BLE signals via the antenna 508. The processor 502 is configured to interface with the radio 506 and the application may be configured to control the radio 506 and antenna 508 when executed on the processor 502.

A second BLE device 510 includes similar hardware an operations to the first BLE device 500. The antenna 508 of the first BLE device 500 is configured to communicate with the antenna 518 of the second BLE device 510.

## Claims

1. A method for establishing a data session between Bluetooth Low Energy, BLE, devices in a network (100) comprising multiple nodes, said multiple nodes being the BLE devices, the method comprising:
when having data to send, starting (304) a first scan mode at a first node (200) of the multiple nodes for establishing a data session with a second node (202) of the multiple nodes ; and,
if the first node fails to receive an advertising, ADV, packet from the second node within a predetermined amount of time after starting the first scan mode, determining (306) whether the data to send was received at the first node from an upstream node or a downstream node, wherein:
(i) if the data to send was received from a downstream node (308b), the first node begins a second scan mode (310b); and
(ii) if the data to send was received from an upstream node (308a), the first node begins an ADV event (310a).

2. The method of claim 1, wherein, if the data to send was received from an upstream node, the first node waits for a time delay (309) before beginning an ADV event.

3. The method of claim 2, wherein the time delay is a time period which is at least twice of an ADV event.

4. The method of any of claims 1, 2 or 3, wherein, if the data to send was received from an upstream node, and after the ADV event occurs, the first node begins a scan mode of random duration.

5. The method of claim 4, wherein, if the data to send was received from an upstream node, and after the first scan mode occurs, the first node cycles (312) between ADV events and scan modes, wherein the scan modes are of random durations.

6. The method of any of any preceding claim, wherein, if the data to send was received from a downstream node, and after the second scan mode occurs, the first node begins an ADV event.

7. The method of claim 6, wherein, if the data to send was received from a downstream node, and after the ADV event occurs, the first node cycles (312) between scan modes of random durations and ADV events.

8. The method of any preceding claim, wherein a data session is established and the data is transmitted from the first node to the second node (202).

9. The method of claim 8, wherein after the data is transmitted from the first node to the second node, the first node returns to a default mode.

10. A Bluetooth Low Energy, BLE, network (100) comprising multiple BLE devices and being for establishing a data session between the BLE devices, the network comprising:
a first BLE device (200); and
a second BLE device (202);
wherein the first BLE device is configured to enter a first scan mode when having data to send for establishing a data session with the second BLE device (202);
wherein, if the first mode fails to receive an advertising, ADV, packet from the second BLE device within a predetermined amount of time after starting the first scan mode, the first BLE device is configured to determine whether the data to send was received at the first BLE device from an upstream BLE device or a downstream BLE device, and is further configured such that:
(i) if the data to send was received from a downstream BLE device (308b), the first BLE device begins a second scan mode (310b); and
(ii) if the data to send was received from an upstream BLE device (308a), the first BLE device begins an ADV event (310a).

11. A BLE network as claimed in claim 10, wherein the network is configured to operate in accordance with the method of any of claims 2 to 9.

12. A computer program product containing instructions that, when executed by a Bluetooth Low Energy, BLE, network comprising multiple BLE devices, perform the method of any of claims 1 to 9.

## Patentansprüche

1. Verfahren zum Aufbau einer Datensitzung zwischen Bluetooth-Niederenergie-(Bluetooth Low Energy, BLE)Vorrichtungen in einem Netz (100), das mehrere Knoten umfasst, wobei die mehreren Knoten die BLE-Vorrichtungen sind, wobei das Verfahren Folgendes umfasst:
wenn Daten zu senden sind, Starten (304) eines ersten Abtastmodus an einem ersten Knoten (200) der mehreren Knoten zum Aufbau einer Datensitzung mit einem zweiten Knoten (202) der mehreren Knoten; und,
wenn der erste Knoten innerhalb einer vorbestimmten Zeitspanne nach dem Starten des ersten Abtastmodus kein Werbe-(advertising, ADV)Paket von dem zweiten Knoten empfängt, Bestimmen (306), ob die zu sendenden Daten an dem ersten Knoten von einem vorgelagerten Knoten oder einem nachgelagerten Knoten empfangen wurden, wobei:
(i) wenn die zu sendenden Daten von einem nachgelagerten Knoten (308b) empfangen wurden, der erste Knoten einen zweiten Abtastmodus (310b) beginnt; und
(ii) wenn die zu sendenden Daten von einem vorgelagerten Knoten (308a) empfangen wurden, der erste Knoten ein ADV-Ereignis (310a) beginnt.

2. Verfahren nach Anspruch 1, wobei, wenn die zu sendenden Daten von einem vorgelagerten Knoten empfangen wurden, der erste Knoten eine Zeitverzögerung (309) abwartet, bevor er ein ADV-Ereignis beginnt.

3. Verfahren nach Anspruch 2, wobei die Zeitverzögerung eine Zeitspanne ist, die mindestens dem Doppelten eines ADV-Ereignisses entspricht.

4. Verfahren nach einem der Ansprüche 1, 2 oder 3, wobei, wenn die zu sendenden Daten von einem vorgelagerten Knoten empfangen wurden, und nachdem das ADV-Ereignis eingetreten ist, der erste Knoten einen Abtastmodus von zufälliger Dauer beginnt.

5. Verfahren nach Anspruch 4, wobei, wenn die zu sendenden Daten von einem vorgelagerten Knoten empfangen wurden und nachdem der erste Abtastmodus auftritt, der erste Knoten zwischen ADV-Ereignissen und Abtastmodi zyklisch (312) wechselt, wobei die Abtastmodi von zufälliger Dauer sind.

6. Verfahren nach einem der vorhergehenden Ansprüche, wobei, wenn die zu sendenden Daten von einem nachgelagerten Knoten empfangen wurden, und nachdem der zweite Abtastmodus auftritt, der erste Knoten ein ADV-Ereignis beginnt.

7. Verfahren nach Anspruch 6, wobei, wenn die zu sendenden Daten von einem nachgelagerten Knoten empfangen wurden und nachdem das ADV-Ereignis eingetreten ist, der erste Knoten zwischen Abtastmodi mit zufälliger Dauer und ADV-Ereignissen wechselt (312) .

8. Verfahren nach einem der vorhergehenden Ansprüche, wobei eine Datensitzung aufgebaut wird und die Daten von dem ersten Knoten zu dem zweiten Knoten (202) übertragen werden.

9. Verfahren nach Anspruch 8, wobei nach der Übertragung der Daten vom ersten Knoten zum zweiten Knoten der erste Knoten in einen Standardmodus zurückkehrt.

10. Bluetooth-Niederenergie-, BLE-, Netz (100), das mehrere BLE-Vorrichtungen umfasst und zum Aufbau einer Datensitzung zwischen den BLE-Vorrichtungen dient, wobei das Netz Folgendes umfasst:
eine erste BLE-Vorrichtung (200); und
eine zweite BLE-Vorrichtung (202);
wobei die erste BLE-Vorrichtung dazu konfiguriert ist, in einen ersten Abtastmodus einzutreten, wenn sie Daten zum Aufbau einer Datensitzung mit der zweiten BLE-Vorrichtung (202) zu senden hat;
wobei, wenn der erste Modus nicht innerhalb einer vorbestimmten Zeitspanne nach dem Starten des ersten Abtastmodus ein Werbe-, ADV-, Paket von der zweiten BLE-Vorrichtung empfängt, die erste BLE-Vorrichtung dazu konfiguriert ist, zu bestimmen, ob die zu sendenden Daten an der ersten BLE-Vorrichtung von einer vorgelagerten BLE-Vorrichtung oder einer nachgelagerten BLE-Vorrichtung empfangen wurden, und ferner so konfiguriert ist, dass:
(i) wenn die zu sendenden Daten von einer nachgelagerten BLE-Vorrichtung (308b) empfangen wurden, die erste BLE-Vorrichtung einen zweiten Abtastmodus (310b) beginnt; und
(ii) wenn die zu sendenden Daten von einer vorgelagerten BLE-Vorrichtung (308a) empfangen wurden, die erste BLE-Vorrichtung ein ADV-Ereignis (310a) beginnt.

11. BLE-Netz nach Anspruch 10, wobei das Netz dazu konfiguriert ist, gemäß dem Verfahren nach einem der Ansprüche 2 bis 9 zu arbeiten.

12. Computerprogrammprodukt, das Anweisungen enthält, die, wenn sie von einem Bluetooth-Niederenergie-, BLE-, Netz, das mehrere BLE-Vorrichtungen umfasst, ausgeführt werden, das Verfahren nach einem der Ansprüche 1 bis 9 durchführen.

## Revendications

1. Procédé d'établissement d'une session de données entre des dispositifs Bluetooth à faible énergie, BLE, dans un réseau (100) comprenant de multiples noeuds, lesdits multiples noeuds étant les dispositifs BLE, le procédé comprenant :
lorsqu'il y a des données à envoyer, le démarrage (304) d'un premier mode de balayage au niveau d'un premier noeud (200) des multiples noeuds pour établir une session de données avec un second noeud (202) des multiples noeuds ; et,
si le premier noeud ne parvient pas à recevoir un paquet publicitaire, ADV, en provenance du second noeud dans un laps de temps prédéterminé après le démarrage du premier mode de balayage, le fait de déterminer (306) si les données à envoyer ont été reçues au niveau du premier noeud en provenance d'un noeud amont ou d'un noeud aval, dans lequel :
(i) si les données à envoyer ont été reçues en provenance d'un noeud aval (308b), le premier noeud commence un second mode de balayage (310b) ; et
(ii) si les données à envoyer ont été reçues en provenance d'un noeud amont (308a), le premier noeud commence un événement ADV (310a).

2. Procédé selon la revendication 1, dans lequel, si les données à envoyer ont été reçues en provenance d'un noeud amont, le premier noeud attend un délai (309) avant de commencer un événement ADV.

3. Procédé selon la revendication 2, dans lequel le délai est une durée qui est au moins égale au double d'un événement ADV.

4. Procédé selon l'une quelconque des revendications 1, 2 ou 3, dans lequel, si les données à envoyer ont été reçues en provenance d'un noeud amont, et après que l'événement ADV s'est produit, le premier noeud commence un mode de balayage de durée aléatoire.

5. Procédé selon la revendication 4, dans lequel, si les données à envoyer ont été reçues en provenance d'un noeud amont, et après le premier mode de balayage, le premier noeud effectue des cycles (312) entre des événements ADV et des modes de balayage, dans lequel les modes de balayage sont de durées aléatoires.

6. Procédé selon une quelconque revendication précédente, dans lequel, si les données à envoyer ont été reçues en provenance d'un noeud aval, et après que le second mode de balayage s'est produit, le premier noeud commence un événement ADV.

7. Procédé selon la revendication 6, dans lequel, si les données à envoyer ont été reçues en provenance d'un noeud aval, et après que l'événement ADV s'est produit, le premier noeud effectue des cycles (312) entre des modes de balayage de durées aléatoires et des événements ADV.

8. Procédé selon une quelconque revendication précédente, dans lequel une session de données est établie et les données sont transmises du premier noeud au second noeud (202).

9. Procédé selon la revendication 8, dans lequel après la transmission des données du premier noeud vers le second noeud, le premier noeud retourne dans un mode par défaut.

10. Réseau Bluetooth à faible énergie, BLE, (100) comprenant de multiples dispositifs BLE et étant destiné à établir une session de données entre les dispositifs BLE, le réseau comprenant :
un premier dispositif BLE (200) ; et
un second dispositif BLE (202) ;
dans lequel le premier dispositif BLE est configuré pour entrer dans un premier mode de balayage lorsqu'il y a des données à envoyer pour établir une session de données avec le second dispositif BLE (202) ;
dans lequel, si le premier mode ne parvient pas à recevoir un paquet publicitaire, ADV, en provenance du second dispositif BLE dans un laps de temps prédéterminé après le démarrage du premier mode de balayage, le premier dispositif BLE est configuré pour déterminer si les données à envoyer ont été reçues au niveau du premier dispositif BLE en provenance d'un dispositif BLE amont ou d'un dispositif BLE aval, et est également configuré de telle sorte que :
(i) si les données à envoyer ont été reçues en provenance d'un dispositif BLE aval (308b), le premier dispositif BLE commence un second mode de balayage (310b) ; et
(ii) si les données à envoyer ont été reçues en provenance d'un dispositif BLE amont (308a), le premier dispositif BLE commence un événement ADV (310a).

11. Réseau BLE selon la revendication 10, dans lequel le réseau est configuré pour qu'il fonctionne conformément au procédé selon l'une quelconque des revendications 2 à 9.

12. Produit programme d'ordinateur contenant des instructions qui, lorsqu'elles sont exécutées par un réseau BLE (Bluetooth à faible énergie) comprenant de multiples dispositifs BLE, mettent en œuvre le procédé selon l'une quelconque des revendications 1 à 9.
